Europäisches Patentamt

European Patent Office

Office européen des brevets

(19)

(11) Publication number: **0 087 143**
**A1**

(12) # EUROPEAN PATENT APPLICATION

(21) Application number: **83101576.3**

(22) Date of filing: **18.02.83**

(51) Int. Cl.³: **G 06 F 13/00**
**G 06 F 3/04, G 06 F 15/16**
**H 04 L 11/00, H 04 Q 3/54**

(30) Priority: **19.02.82 US 350159**

(43) Date of publication of application:
**31.08.83 Bulletin 83/35**

(84) Designated Contracting States:
**AT BE CH DE FR GB IT LI NL SE**

(71) Applicant: **BILLINGS COMPUTER CORPORATION**
**18600 East 37th Terrace South**
**Independence Missouri 64057(US)**

(72) Inventor: **Billings, Roger Evan**
**18600 East 37th Terrace South**
**Independence Missouri 64057(US)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) Distributed data processing system.

㊗ A distributed data processing system includes a plurality of user stations (4) for servicing users, each of which has its own processor (100), input/output device (128), and memory (112) by which information supplied by a user may be processed pursuant to applications programs and the resultant delivered to the user, a plurality of data centers (8) for storing data to be processed by the user stations, and a network for couplings (12) each user station to one or more of the data centers. Each data center (8) includes its own processor (200) and mass storage device for storing data of common interest to two or more of the user stations. The user stations (4) and the data centers (8) may communicate, but user stations generally may not communicate with other user stations and data centers may not communicate with other data centers. The network facilitates (12) coupling a user station directly to a data center and, if desired, coupling a user station via a modem to a telephone switching network (16) so that the user station may access a remote data center.

Fig. I

Croydon Printing Company Ltd

1

# DISTRIBUTED DATA PROCESSING SYSTEM

This invention relates to a distributed data processing system wherein a plurality of users can share common data files in a simple and efficient manner.

Data processing systems in common use today generally include a large main frame computer having a plurality of input/output terminals by which users communicate with the computer. The main frame computer serves to both manipulate data, perform calculations, etc., pursuant to applications programs, and store and retrieve data either for use in the manipulation, calculations, etc., or simply for delivery to one of the terminals. Although such a conventional arrangement provides significant computing power and access by numerous user terminals, the main frame computer necessary for servicing the terminals and providing the data processing capabilities is large, complex and costly. Further, the computing power of such systems, although significant, cannot be increased except by provision of an entire additional system.

It has been suggested that dividing up the data processing task and distributing it among more than one central processing unit would provide certain economies and advantages not achievable with the use of a single, large main frame central processing unit. (See, e.g., publication A20-710-101, "Evolving Office of the Future", January, 1980, by Datapro Research Corp.) An example of one such advantage is to allow for piece-wise growth of a small system into a larger system as needs increase, rather than starting out with a full-blown large scale system initially. Typically, the various central processing units for use in a distributed data processing system have the capability of communicating with one another, and, in fact, to achieve full processing capability, it is generally essential in such systems to provide for communication among the various central processing units. However, implementation of the capability of inter-processor communication results in a sacrifice of some of the economies and simplicity which was desired in proposing the distributed data processing system. This is because of the increased complexity of programming each central processing unit to not only store, retrieve and process data, but also initiate, respond to, and monitor inter-processor communication requests. That is, a significant part of each central processing unit's operation time (and operating system) is taken up in simply accommodating communication with the other central processing units. Also, any change in the programming of one central processing unit or its associated storage files generally requires changes in the programming or associated data files of the other related central processing units. Thus far, there have been no distributed data processing configuration offered which would provide the apparent advantages of distributed data processing without the attendant problems.

It is an object of the present invention to provide a new and improved distributed data processing system which is simple in design, and easy and inexpensive to implement.

It is also an object of the invention to provide such a system which readily accommodates expansion without a corresponding increase in complexity.

It is another object of the invention to provide a distributed data processing system wherein the throughput of the system can be selectively increased as desired by the user.

It is an additional object of the invention to provide such a system wherein modification may be made in one part of the system without requiring significant changes in the other parts of the system.

It is a further object of the invention to provide such a system which is suitable for handling a variety of data processing needs.

It is still another object of the invention to provide such a system in which failure in one part of the system will not obviate use of the entire system.

The present invention grows out of and is founded upon the unique premise that computer operations can be broken down into two basic categories or functions-- (1) servicing a user by receiving input information, operating upon information, and supplying information to the user (this function is hereinafter referred to as the user station function), and (2) storing and retrieving information from information storage equipment (this function is hereinafter referred to as the data center function). In the system of the present invention, these two basic functions are segregated in a way which accommodates simplified planning and implementation of large multi-user distributed data processing systems at a far lower cost and complexity than heretofor thought possible, and with more flexibility and adaptability to growth in both capacity (number of users serviced and amount of data processed) and capability (kinds of data processing which can be performed). The segregation is carried out by dedicating or assigning each central processing unit to one of the above two functions or classifications of computer operations. Thus, the system of the present invention includes a plurality of user stations each dedicated to servicing a user (which could be a person, another device, or machine) and each functioning as a stand-alone computer, having its own central processing unit, typically a micro-processor, and equipment by which the user can communicate with the central processing unit, typically a video display and keyboard terminal. The user stations may have other peripheral equipment as well, such as disk drives, printers, card readers, or the like. The user stations service the users by executing application programs supplied by the users.

The system of the invention also includes one or more data centers dedicated to the storage and retrieval of data which may be required by two or more user stations, or, in some instances, of data which is required by only one user station but which is more economically stored at the data center. Each data center includes its own central processing unit, mass storage unit such as a hard disk drive, and a data access control program. The data access control programs are essentially the same for all data centers in a system for reasons which will become apparent. The data center functions to respond to inquiries from the user stations to either receive and store data supplied by a user station or retrieve stored data and supply it to a user station, all under the control of the data access control program.

The system operates pursuant to certain rules of interaction or specifications which greatly simplify the implementation of the system, without restricting its flexibility or adaptability for growth. Pursuant to these rules, only a user station may initiate communication between the user station and the data center, and there may be no communication between user stations or between data centers. In operation, a user station initiates contact (inquires) with a data center using any of a variety of conventional protocol procedures, and the data center, which is always operating in an access mode under control of a data access control program, responds to the inquiry and communication is established. The user station communicates a request to the data center's data access control program either to store data supplied or to retrieve already stored data.

The data center's data access control program then carries out the request by either storing supplied data in mass storage or retrieving data and sending it to the user station.

Because of the segregation of functions and the implementation of the rules of interaction, the programming of the user stations is greatly simplified. The user station programs need not accommodate instructions for communicating with other user stations and, because the data center's data access control programs are essentially the same, one set of user station application program techniques is suitable for communicating with any of the data centers. The data center access control program need not accommodate instructions for interfacing directly with other data centers, for carrying out application data processing, or for initiating contact with user stations, and thus is greatly simplified.

In the drawings:

The above-mentioned objects, features and advantages of the invention will become apparent from a consideration of the following detailed description presented in connection with the accompanying drawings in which:

FIG. 1 shows a distributed data processing system made in accordance with the principles of the present invention; and

FIG. 2 shows detailed embodiments of a user station
and data center which can be used in the system
of the present invention.


Referring now to the drawings:

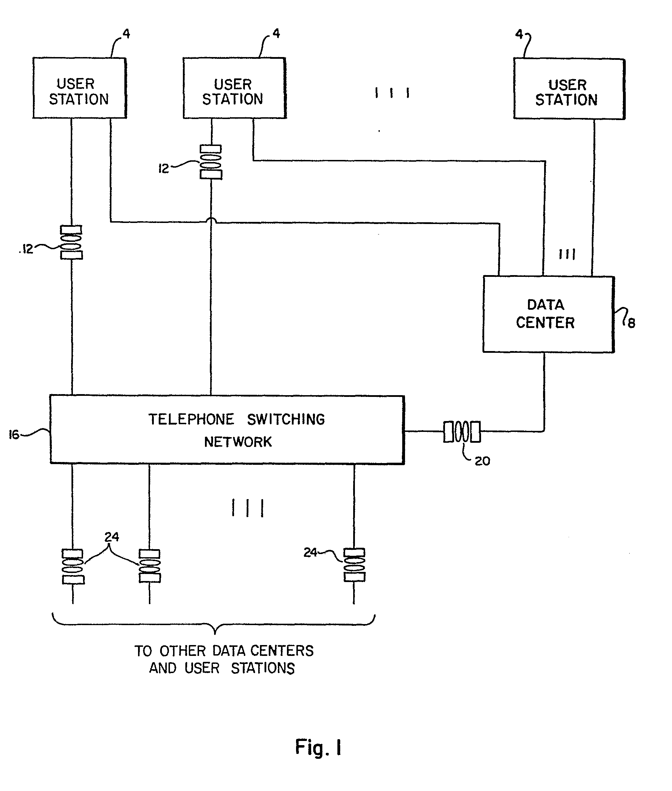

Referring to FIG. 1, there is shown a specific illustrative
embodiment of a distributed data processing system
made in accordance with the present invention. The
system includes a plurality of user stations 4 for
interfacing with and carrying out the processing needs
of users, with the user stations being coupled directly
to a data center 8 for storing data of common interest
to the user stations. Two of the user stations 4 are
also coupled by way of modems 12 to a switching network
16 which could, for example, be the Bell System telephone
switching network. The data center 8 is also coupled
by way of a modem 20 to the switching network 16.
Other user stations and data centers are also connected
to the switching network 16 by way of modems 24 so
that such user stations can connect to the data center
8 and so that the user stations 4 can connect to such
data centers. The modems 12, 20 and 24 are conventional
modulator/demodulators for enabling transmission of
data over the switching network 16. The switching
network 16, in addition to being the Bell System telephone network, could also be a private network used to interconnect user stations with data centers, a packet (message) switched network, etc.

In accordance with the present invention, the system of FIG. 1 is designed to operate according to certain "rules of interaction" which serve to reduce the complexity of the system, without reducing its flexibility and adaptability to growth. These rules specify that only a user station may initiate communication between the user station and a data center, and that there be no communication between user stations or between data centers—at least no communication of any significance. These rules may be implemented in the system of FIG. 1 either by hardware design or by appropriate programming. In the former case, no direct communication links between user stations 4 or between the data center 8 and any other data center would be provided, and the switching network 16 would be designed so that no wire path between user stations or between data centers would be allowed. If the rules were implemented by programming, then each user station 4 would include instructions and addresses enabling connection of the user station only to data centers, while the data center programs would contain no instructions whatever for allowing connection to another data center or for initiating a connection with a user station. The rules of interaction also require that the data center 8 and any other data centers continually operate in an access mode--a mode in which the data centers are conditioned to respond to any "request" which may be received from any user station.

Each user station 4 is equipped to service a user by receiving input information, operating upon or processing such information, and supplying information to the user. Each user station 4 is also equipped to request service of at least one of the data centers, establish communication therewith, and supply data to and receive data from the data centers. Each data center 8 is equipped to respond to requests for service from the user stations, receive data from user stations and store such data in mass storage, and retrieve data from mass storage and supply it to requesting user stations. These functions are carried out by providing each user station 4 and each data center with its own central processing unit as will be discussed in greater detail hereafter.

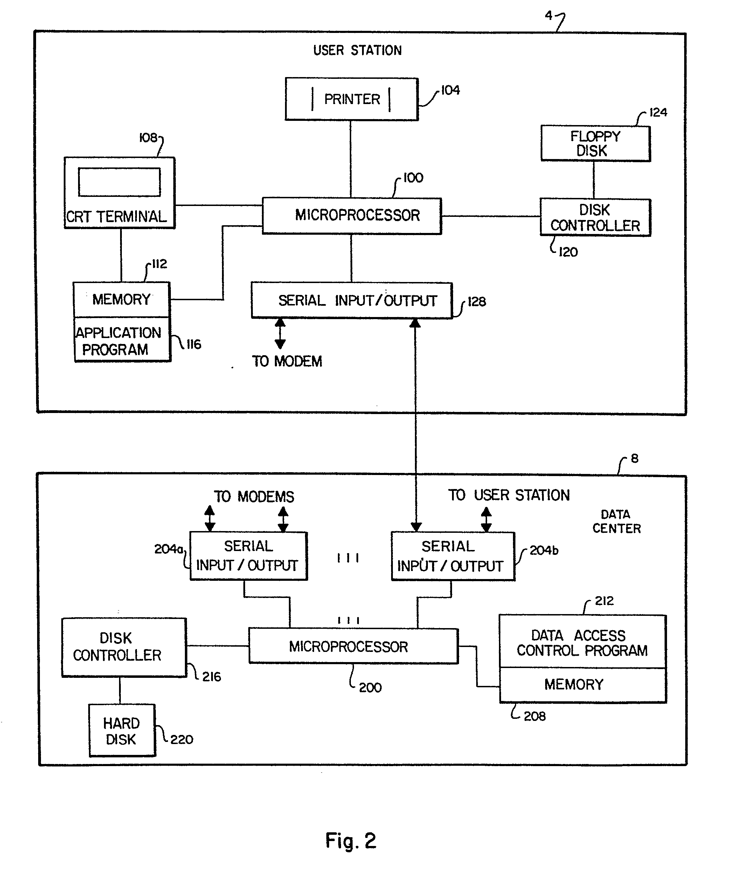

FIG. 2 shows specific illustrative embodiments of a user station 4 and a data center 8 connected by a direct link. The user station 4 includes a microprocessor 100, which could be any conventional microprocessor currently available on the market such as the Zilog Z-80 microprocessor. Coupled to the microprocessor 100 is a conventional hard copy printer 104 for receiving data from the microprocessor 100 and for printing such data for use by a user, a conventional cathode ray tube terminal 108 having a keyboard by which information may be communicated to the microprocessor and a screen for displaying information either typed on the keyboard or received from the microprocessor, and a main memory 112, such as a random access memory (RAM), for temporarily storing data to be processed by the microprocessor and application program instructions 116 which are to be executed by the microprocessor. The cathode ray tube terminal 108 is also coupled directly to the main memory 112 to allow display of data received directly therefrom. Also coupled to the microprocessor 100 is a conventional floppy disk controller 120 (such as Western Digital 1791 controller) which, in turn, is coupled to a conventional floppy disk drive 124. Other peripheral units such as card readers, hard disk drives, etc., could also be coupled to the microprocessor 100.

In order to communicate with a data center, the user station 4 includes a serial input/output device 128 having two ports, one of which is used for coupling the user station directly to the data center 8 and the other of which may be used to connect the user station to a modem and from there to the switching network 16 (FIG. 1). An exemplary serial input/output device suitable for use as the device 128 in the user station 4 is the Zilog Z-80 SIO.

The data center 8 includes a microprocessor 200 coupled to a plurality of serial input/output ports 204. These ports, which again could be driven by the Zilog Z-80 SIO, enable the data center 8 to communicate either directly to user stations or via modems to the switching network 16 (FIG. 1) so that the data center 8 may service a number of user stations essentially simultaneously. The data center 8 also includes a main memory 208 for temporarily storing data and programs to be executed by the microprocessor 200. In particular, the main memory 8 would store a data access control program 212 for controlling the microprocessor 200 to respond to requests from user stations by storing data in or retrieving data from a mass storage device such as a hard disk driver 220 coupled by way of a disk controller 216 to the microprocessor.

Although specific equipment are shown for the user station 4 and data center 8 of FIG. 2, it should be understood that a variety of configurations could be utilized to enable the user station to operate as an interface with users and to process application programs, and to enable the data center to serve as a storage

13

and retrieval center for data of common interest to the user stations. Illustratively, the user station would be utilized to interact with the operator, generate payroll information, produce accounting reports, process accounts payable and accounts receivable, sort, compile, process hotel or airline reservation requests, and in general process data pursuant to a variety of conventional application programs. The data centers illustratively would serve to store data relating to the personnel of a company, payroll information regarding such personnel, accounts payable and accounts receivable data, information regarding occupancies and vacancies in a hotel chain or airline system, and generally any type of data which may be of interest to more than one user station.

As a user station executes an application program and the program reaches a point where stored data is required, the user station initiates communication with the data center so that the appropriate data can be retrieved and transmitted to the requesting user station. When the data is received by the user station, the user station utilizes the data in the manner directed by the application program. Similarly, if a user station in the course of executing an application program needs to store, update, or modify data in the data center, it initiates communication with the data center and transmits the data to be stored.

There are a variety of methods by which a user station 4 might establish communication with a data center 8. For one such illustrative method, the data center 8 is provided with a data access control program which includes a conventional data base manager program for controlling the storage and retrieval of data at the data center, a communication program for controlling communication with the user station, and a data center program for interfacing with the communications program and data base manager. The user station 4 similarly is provided with a communications program for controlling communication with the data center, and a data base simulator program which interfaces with the communications program and whatever application program is being executed by the user station. The data base simulator program enables an application program at the user station to call for storage or retrieval of data from the data center as though it were calling for data from a data base resident at the user station.

When an application program being executed at the user station 4 reaches a point where stored data is needed or where it is necessary to store (or update or modify) data, the application program calls the data base simulator program and identifies what action is to be taken and the file location in the data center where data is to be stored or from which data is to be retrieved.

The data base simulator program is thus linked to the application program and then calls the communications program and identifies what action is to be taken, the file location and, if data is to be stored, the data which is to be stored. The communications program responds by adding appropriate communication protocol to this information or message such as sync characters, error checking characters, etc., and generally prepares the message for transmittal. The communications program then supplies the message to the serial input/output device 128 which transmits it to the data center 8.

At the data center 8, the serial input/output device 204b receives the transmitted message and interrupts the communications program which operates continually in an access mode in the data center. The communications program checks the protocol and, if the protocol is in order indicating that the message is a permitted one and was correctly received, the communications program causes transmittal of an acknowledgement signal to the user station 4. If the protocol is not in order, the communications program causes transmittal of signals to the user station to indicate the problem. Assuming the protocol is in order, the communications program calls the data center program and identifies the action to be taken and the file location. If data is to be stored, the data is supplied to the data center program.

The data center program then calls the data base manager and links therewith. The data base manager responds by carrying out the action called for in the received message--either storing data in the identified file in the hard disk drive 220 or retrieving data therefrom. After the action is performed, the data base manager passes a response to the data center program--a verification if data was stored, or the data retrieved if that occurred. The data center program calls the communication program which then adds appropriate communication protocol to the response and supplies the response to the serial input/output device 204b for transmittal to the user station. In this manner, communication between a user station and data center may be established, and data exchanged.

With the distributed data processing system of the present invention, a plurality of users may be serviced in a simple, efficient and inexpensive fashion. Although specific illustrative embodiments have been described, it should be understood that the invention is not limited to these embodiments. For example, the invention contemplates and encompasses a multiprocessing system where a portion of the multiprocessor is dedicated to servicing the data storage needs of not only remote user stations, but also resident application programs. Also, although the distributed data processing system was described to prohibit communication between user stations, some nominal provision for such communication on a limited basis would not be considered a departure from the present invention. Finally, it is considered within the skill of the art to provide detailed programs for implementing the invention in a variety of specific alternative embodiments and the appended claims are intended to cover all such alternative embodiments or arrangements.

## C L A I M S

1.    A distributed data processing system comprising a plurality of user stations each including a first central processing unit, input means by which a user supplies information to the central processing unit, output means by which the central processing unit supplies information to a user, and an application program for controlling the operation of the central processing unit,

one or more data centers each including a second central processing unit, mass storage means for storing data, and an access control program for controlling the operation of the second central processing unit,

means for connecting each user station to one or more of the data centers to carry data therebetween,

operating each user station pursuant to the application program to receive data from a user, supply data to a user, process data, communicate requests for service to the data center, and supply data to and receive data from a data center over the connecting means, and

operating each data center pursuant to the access control program to respond to requests for service from the user stations, receive data over the connecting means from the user station and store such data in the mass storage means, and retrieve data from the mass storage means and supply it to a user station over the connecting means.

2. A distributed data processing system as in Claim 1 further including operating a selected user station pursuant to an application program to request and receive certain data from the data center and to perform an operation with respect to such certain data not performed by the other user stations, operating at least some of the other user stations to supply said certain data to the data center, and operating the data center pursuant to the access control program to store said certain data in a preselected file in the mass storage means.

3. A distributed data processing system as in Claim 1 further including operating each of the user stations to communicate requests for service only to data centers.

4. A distributed data processing system as in Claim 3 further including operating each of the data centers to receive data from and supply data to only user stations.

5. A distributed data processing system as in Claim 1 wherein said connecting means includes direct links from some user stations to a data center, and a switched network between user stations and data centers.

6. A distributed data processing system as in Claim 1 wherein the second central processing unit of at least one data center comprises a multiprocessor, said system further including

a certain application program, and

operating the multiprocessor to both process data pursuant to said certain application program and to store and retrieve data pursuant to the access control program of the said one data center.

7. In a distributed data processing system having a plurality of user station computers, one or more data center computers, and a network for connecting each user station computer with each data center computer, a method of processing data comprising

operating each user station computer pursuant to an application program to receive data from and supply data to a user, to process such data, and to establish communications with a selected data center computer, and

operating each data center computer pursuant to a data access control program to receive data from a user station computer which has established communication.

8.   A method as in Claim 7 further comprising

operating each user station computer pursuant to its own application program to establish connections with any of the data centers either directly or through a network, and

operating each data center computer pursuant to a data access control program, which is substantially the same as the data access control programs of the other data centers, to receive data from user stations and store such data in a mass storage device, and to retrieve data stored in the mass storage device and supply it to user stations.

9.   A distributed data processing system comprising

one or more user stations for processing data pursuant to an application program, each user station including a central processing unit, first means for supplying information to the central processing unit, second means by which the central processing unit supplies information to an external entity, and main memory means storing data and application program instructions to be executed by the central processing unit,

one or more data centers for storing data to be processed by the user stations and for retrieving and supplying data to requesting user stations, each data center including processor means, main memory means storing data and data access control program instructions to be executed by the data center's processor means, and mass storage means for storing data to be processed by the user stations, and

means for coupling each user station to one or more of the data centers for the transmittal of data therebetween.

10. A system as in Claim 9 wherein there are two or more user stations, and wherein each user station is programmed to communicate only with one or more data centers to supply data thereto and receive data therefrom.

11. A system as in Claim 10 wherein there are two or more data centers, and wherein each data center is programmed to communicate only with user stations to receive data therefrom and supply data thereto.

12. A system as in Claim 9 wherein there are two or more user stations, and wherein said coupling means connects each user station only to one or more data centers to supply data thereto and receive data therefrom.

13. A system as in Claim 12 wherein there are two more data centers, and wherein said coupling means connects each data center only to one or more user stations.

14. A system as in Claim 9 wherein there are two or more user stations and two or more data centers, and wherein said coupling means comprises a wire switched network.

15. A system as in Claim 9 wherein there are two or more user stations and two or more data centers, and wherein said coupling means comprises a packet (message) switched network.

16. A system as in Claim 9 wherein there are two or more user stations and two or more data centers, and wherein said coupling means includes

direct connecting means for connecting at least one of the user stations directly to one of the data centers, and

network connecting means for connecting at least one user station to a telephone network, and for connecting at least one of the data centers to the telephone network to enable communication between the user station and data center connected to the telephone network.

17. A system as in Claim 16 wherein at least one user station is connected both by the direct connecting means to a data center and by the network connecting means to the telephone network, and wherein at least one data center is connected both by the direct connecting means to a user station and by the network connecting means to the telephone network.

18.  A method of operating a distributed data network having one or more user stations for processing data pursuant to application programs, and one or more data centers for receiving and storing data to be processed by the user stations and for retrieving and supplying data to requesting user stations, all pursuant to data access control programs which are substantially the same for each data center, said method including

providing each user station with a central processing unit, first means for supplying information to the central processing unit, second means by which the central processing unit supplies information to a user, and main memory means for storing data and instructions to be executed by the central processing unit,

supplying the user stations with application program instructions which enables the user stations to process data pursuant to the instructions and to send data to and request data from the data centers,

providing each data center with a central processing unit, main memory means for storing data and instructions to be executed by the central processing unit, and mass storage means for storing data supplied by or to be supplied to the user stations,

supplying the data centers with data access control program instructions which enable the data centers to respond to requests for data from the user stations and to send data stored in the mass storage means to the requesting user stations, and to receive data from user stations and store same in the mass storage means, and

providing communication links by which each user station may communicate with at least one data center.

19. A method as in Claim 18 further including

operating each user station pursuant to its application program instructions to receive input information from a user, supply information to a user, process data, initiate communication with a data center and supply data to a data center and receive data from a data center over a communication link, and

operating each data center pursuant to its data access control program instructions to respond to user stations' initiation of communication, receive data from user stations for storage in mass storage, and retrieve data from mass storage for transmittal to user stations.

20. A method as in Claim 19 wherein initiation of communication with a data center by a user station comprises

the user station application program calling a subsidiary program when communication is desired and transferring to the subsidiary program a message including data identifying the action to be taken at the data center, the location in mass storage affected by the action, and any other data to be sent to the data center,

the subsidiary program generating communication protocol for the message and then causing transmittal of the message and protocol to the data center,

a data center subsidiary program receiving the transmitted message and protocol, and processing the protocol to determine if the message was correctly transmitted,

the data center subsidiary program causing transmission of an acknowledgment signal to the user station if the message was correctly transmitted, and calling the data access control program and transferring thereto the received message, and

the data access control program performing the action identified in the message at the identified location in mass storage by either storing received data or retrieving stored data for transmittal to the user station.

USER STATION — 4
USER STATION — 4
USER STATION — 4

12
.12
III

DATA CENTER — 8

TELEPHONE SWITCHING NETWORK

16
20

III

24
24

TO OTHER DATA CENTERS AND USER STATIONS

Fig. I

Fig. 2

# EUROPEAN SEARCH REPORT

**0087143**
Application number

**EP 83101576.3**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | TELCOM REPORT, vol. 3, February 1980, Siemens Aktiengesellschaft, Berlin und München<br><br>H. CHOFFAT et al. "Einführung in Rechnernetze"<br>pages 67-74<br><br>    * Fig. 2,3,5; page 69, right hand column, lines 1-16; page 70, line 21 - page 71, left hand column, line 36 *<br><br>-- | 1,7,9, 14,15, 18 | G 06 F 13/00<br>G 06 F 3/04<br>G 06 F 15/16<br>H 04 L 11/00<br>H 04 Q 3/54 |
| A | ELEKTRONIK, vol. 29, March 1980, no. 6, München<br><br>M. KLEIN "Kommunikationsprozessoren machen einfache Peripheriegeräte intelligent"<br>pages 99-102<br><br>    * Fig. 1 *<br><br>-- | 1,7,9 | |
| A | US - A - 4 319 337 (SANDER et al., 50S)<br><br>    * Fig. 1 *<br><br>---- | 1,7,9 | TECHNICAL FIELDS SEARCHED (Int. Cl. ³)<br><br>G 06 F<br>H 04 L<br>H 04 M<br>H 04 Q |

The present search report has been drawn up for all claims

| Place of search | Date of completion of the search | Examiner |
|---|---|---|
| VIENNA | 19-05-1983 | MIHATSEK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82